(19) Europäisches Patentamt / European Patent Office / Office européen des brevets

(11) **EP 2 912 526 B1**

(12) **FASCICULE DE BREVET EUROPEEN**

(45) Date de publication et mention
de la délivrance du brevet:
**06.12.2017 Bulletin 2017/49**

(51) Int Cl.:
***G05B 23/02*** *(2006.01)*

(21) Numéro de dépôt: **13815017.2**

(86) Numéro de dépôt international:
**PCT/FR2013/052553**

(22) Date de dépôt: **25.10.2013**

(87) Numéro de publication internationale:
**WO 2014/064396 (01.05.2014 Gazette 2014/18)**

(54) **SYSTÈME DE SURVEILLANCE D'UN ENSEMBLE DE COMPOSANTS D'UN ÉQUIPEMENT**

SYSTEM ZUR ÜBERWACHUNG EINER GRUPPE VON KOMPONENTEN EINER VORRICHTUNG

SYSTEM FOR MONITORING A SET OF COMPONENTS OF A DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.10.2012 FR 1260230**

(43) Date de publication de la demande:
**02.09.2015 Bulletin 2015/36**

(73) Titulaire: **Snecma**
**75015 Paris (FR)**

(72) Inventeurs:
• **LACAILLE, Jérôme**
**77550 Moissy-Cramayel Cedex (FR)**
• **RABENORO, Tsirizo**
**77550 Moissy-Cramayel Cedex (FR)**

(74) Mandataire: **Brevalex**
**95, rue d'Amsterdam**
**75378 Paris Cedex 8 (FR)**

(56) Documents cités:
FR-A1- 2 931 264     US-A1- 2004 034 456
US-A1- 2006 064 291     US-A1- 2010 306 588

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne le domaine de systèmes de surveillance d'un équipement tel qu'un moteur et plus particulièrement, d'un système de surveillance d'un ensemble de composants moteur d'aéronef.

**ÉTAT DE LA TECHNIQUE ANTÉRIEURE**

La surveillance d'un moteur et en particulier d'un moteur d'aéronef est très importante pour le bon fonctionnement du moteur. On utilise différents dispositifs de surveillance ou de détection d'anomalie pour vérifier le bon fonctionnement des différents composants du moteur. Il existe par exemple, un dispositif de surveillance pour analyser le comportement de processus d'allumage, un autre pour analyser la trajectoire des gaz, un autre encore pour détecter le colmatage des filtres, et un autre pour analyser la consommation d'huile, etc.

Tous ces dispositifs de détection et de surveillance permettent d'améliorer la sécurité et la fiabilité des moteurs d'aéronef. En particulier, ils permettent d'éviter ou de limiter l'arrêt en vol (in-flight shutdown IFSD), de réduire les retards ou annulation des vols (delays and cancellations D&C), et plus particulièrement, facilitent la maintenance du moteur en anticipant les défaillances et en identifiant les composants fautifs ou défaillants.

Les différents dispositifs de détection exploitent des données d'entrée diverses et peuvent être paramétrés différemment en fonction des types de défauts que l'on souhaite repérer. En effet, on n'observe pas nécessairement les mêmes paramètres selon les composants ou ensembles de composants suivis. De même, en fonction des types de défauts que l'on cherche à repérer on ne va pas mesurer les mêmes grandeurs physiques.

Les résultats produits par ces dispositifs de détection relatifs à un moteur sont des probabilités ou risques d'anomalies associés à des informations de précision. Etant donné que tous les composants du moteur sont liés entre eux, les dispositifs de détection le tri pour aider les opérateurs de maintenance à prendre une décision quant à la dépose du moteur ou de sa réparation.

Toutefois, ceci nécessite un grand temps d'analyse et en plus, il est difficile pour les experts d'exploiter toutes les données qui peuvent être pertinentes pour la surveillance du moteur.

En outre, un grand taux de détection génère un grand taux de fausses alarmes. Ainsi, on observe une dualité entre la possibilité d'avoir un taux de fausses alarmes réduit et une bonne détection. Réduire le taux de fausses alarmes, diminue fatalement le taux de détection. Or, ce taux de fausses alarmes est très important pour une application de surveillance. En effet, si un dispositif de détection suggère à tort une opération de maintenance coûteuse par nature, ce dispositif de détection va perdre toute crédibilité. Par ailleurs, dans le domaine de l'aéronautique, la conception des équipements est extrêmement fiabilisée, ce qui a tendance à limiter fortement les taux de pannes et donc d'augmenter le risque de fausses alarmes.

Un dispositif de détection d'une panne dans un ensemble d'équipements reliés en réseau est connu par exemple par le document FR2931264.

L'objet de la présente invention est de proposer un système de surveillance d'un ensemble de composants moteur permettant d'aider les opérateurs de maintenance à prendre une décision tout en augmentant le taux de détection sans augmenter le taux de fausses alarmes.

**EXPOSÉ DE L'INVENTION**

La présente invention peut être étendue à tout équipement. Ainsi, elle est définie par un système de surveillance d'un ensemble de composants d'un équipement tel qu'un moteur, comportant :

- des moyens de détection comprenant un ensemble d'agents de détection d'anomalies, chacun desdits agents étant configuré pour recevoir des mesures sur des paramètres physiques relatifs à un sous-ensemble de composants d'un équipement tel qu'un moteur et pour délivrer une distribution initiale de probabilité d'anomalie,
- des moyens d'acquisition configurés pour recevoir des informations de retour d'expérience ainsi que les distributions initiales de probabilité d'anomalie issues dudit ensemble d'agents,
- des moyens d'émergence configurés pour faire émerger de manière itérative des distributions courantes de probabilité d'anomalie en adéquation avec lesdites informations de retour d'expérience, lesdites distributions courantes de probabilité d'anomalie convergeant vers un ensemble de distributions optimales de probabilité d'anomalie en conformité avec lesdites informations de retour d'expérience, et
- des moyens de synthèse configurés pour synthétiser des distributions optimales de probabilité d'anomalie relatives à au moins un sous-ensemble d'intérêt de composants de l'équipement tel qu'un moteur afin d'extraire des risques d'anomalie spécifique audit sous-ensemble d'intérêt.

Ainsi, le système de surveillance permet d'augmenter fortement le taux de détection tout en gardant un faible taux de fausses alarmes et permet de faire le tri des résultats afin de focaliser sur les risques d'anomalie concernant un sous-ensemble particulier de composants de l'équipement tel qu'un moteur. Ainsi, le système permet de repérer les éléments présentant un plus grand risque et par conséquent, de faciliter le discernement et la prise de décision en termes d'opérations de maintenance concernant le sous-ensemble suivi.

Avantageusement, les moyens d'émergence comportent :

- des moyens de fusion configurés pour créer chaque distribution courante ou optimale de probabilité d'anomalie en fusionnant des distributions précédentes de probabilité d'anomalie selon des règles de fusion prédéterminées,
- des moyens d'optimisation configurés pour mettre en adéquation chaque distribution initiale ou courante de probabilité d'anomalie avec l'information de retour d'expérience qui lui correspond, afin de lui associer une valeur d'efficacité, et
- des moyens de gestion configurés pour faire évoluer l'ensemble d'agents vers une population optimale d'agents en créant de nouveaux agents correspondants aux distributions courantes et optimales de probabilité d'anomalie et en sélectionnant les agents les plus conformes avec les informations de retour d'expérience selon les valeurs d'efficacité associées auxdites distributions courantes et optimales de probabilité d'anomalie.

Ceci permet de moduler de manière dynamique les agents de détection d'anomalie et de faire émerger des agents qui s'adaptent de manière continue aux événements les plus intéressants.

Avantageusement, les moyens d'émergence sont en outre configurés pour associer à chaque distribution initiale, courante ou optimale de probabilité d'anomalie relative à un sous-ensemble de composants de l'équipement tel qu'un moteur, un vecteur d'implication reflétant une contribution de chaque élément dudit sous-ensemble sur la distribution de probabilité d'anomalie correspondante.

Ceci permet de lier de manière efficace les probabilités d'anomalie aux différents éléments de l'équipement tel qu'un moteur.

Avantageusement, les moyens de synthèse sont configurés pour synthétiser les distributions optimales de probabilité d'anomalie relatives audit sous-ensemble d'intérêt en pondérant l'influence de chaque élément dudit sous-ensemble d'intérêt selon les vecteurs d'implication correspondants.

Avantageusement, les règles de fusion prédéfinies peuvent être choisies parmi les règles suivantes : règles expertes, règles de réduction, règles de vote, règles métiers, règles bayésiennes, et règles de logique floue.

Ceci permet de combiner différentes sources d'informations augmentant ainsi la fiabilité de la surveillance.

Avantageusement, les moyens d'optimisation sont en outre configurés pour ajuster les règles de fusion en fonction des informations de retour d'expérience.

Avantageusement, l'ensemble d'agents ou la population optimale d'agents est formé par des instances d'algorithmes comprenant des choix de mesures différents, ou des méthodes de traitement différentes, ou des paramétrages différents.

Avantageusement, les distributions initiales de probabilité d'anomalie sont standardisées par rapport au contexte des mesures.

Avantageusement, le système de surveillance comporte des moyens d'aide à la décision qui permettent de déterminer les opérations de maintenance en fonction des risques d'anomalies.

Avantageusement, ledit équipement est un moteur et notamment un moteur d'aéronef.

L'invention vise également un procédé de surveillance d'un ensemble de composants d'un équipement tel qu'un moteur, comportant les étapes suivantes :

- acquérir des informations de retour d'expérience ainsi que des distributions initiales de probabilité d'anomalie issues d'un ensemble d'agents de détection d'anomalies, chacun desdits agents étant configuré pour recevoir des mesures sur des paramètres physiques relatifs à un sous-ensemble de composants de l'équipement tel qu'un moteur avant de délivrer une distribution initiale de probabilité d'anomalie,
- faire émerger de manière itérative des distributions courantes de probabilité d'anomalie en adéquation avec lesdites informations de retour d'expérience, lesdites distributions courantes de probabilité d'anomalie convergeant vers un ensemble de distributions optimales de probabilité d'anomalie en conformité avec lesdites informations de retour d'expérience, et
- synthétiser des distributions optimales de probabilité d'anomalie relatives à au moins un sous-ensemble d'intérêt de composants de l'équipement tel qu'un moteur afin d'extraire des risques d'anomalie spécifique audit sous-ensemble d'intérêt.

## BRÈVE DESCRIPTION DES DESSINS

La Fig. 1 illustre de manière schématique un procédé de surveillance d'un ensemble de composants d'un équipement tel qu'un moteur, selon l'invention ;
La Fig. 2 illustre de manière schématique un système de surveillance d'un ensemble de composants d'un équipement tel qu'un moteur, selon l'invention ;
Les Figs. 3A-3D illustrent de manière schématique des exemples de fusion dans un système de surveillance d'un ensemble de composants d'un équipement tel qu'un moteur d'aéronef, selon l'invention ; et
La Fig. 4 illustre de manière schématique un exemple particulier de synthèse selon le système de surveillance de la présente invention.

## EXPOSÉ DÉTAILLÉ DE MODES DE RÉALISATION PARTICULIERS

Le principe de l'invention est de fusionner différentes sources de détection d'anomalie sur un équipement tel qu'un moteur pour faire émerger de manière automatique et optimisée des informations discernables et utiles pour une prise de décision relative à des opérations de maintenance sur l'équipement.

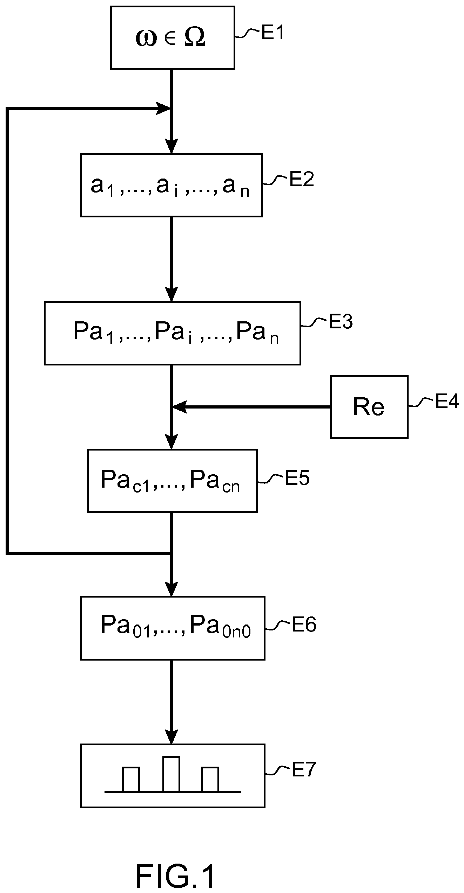

La Fig. 1 illustre de manière schématique un procédé de surveillance d'un ensemble de composants d'un équipement tel qu'un moteur, selon l'invention.

La présente invention est généralisable à tout équipement notamment équipement d'un aéronef. Par « équipement », on entend un moteur notamment un moteur d'aéronef, un système d'analyse de la capacité à démarrer notamment pour un système d'aéronef, un outil de confirmation de diagnostic, un système embarqué d'analyse vibratoire, un système de surveillance de roulements, un système d'identification des missions (workscopes) du moteur lors des passages en atelier, un système d'identification automatique de causes de notifications CNR (Customer Notification Report), un système de dépannage (troubleshooting), etc.

Par souci de brièveté, on utilisera dans la suite l'expression « ensemble de composants d'un équipement pour désigner l'équipement tout entier ou un système de l'équipement comprenant plusieurs composants et en particulier, on utilisera l'expression « ensemble de composants moteur » pour désigner le moteur tout entier ou un système du moteur comprenant plusieurs composants. On utilisera aussi l'expression « sous-ensemble de composants d'un équipement » pour désigner un sous-système de l'équipement comprenant un seul composant ou encore plusieurs composants et en particulier, on utilisera l'expression « sous-ensemble de composants moteur » pour désigner un sous-système du moteur comprenant un seul composant ou encore plusieurs composants du moteur.

Le procédé de surveillance selon invention met en oeuvre un raisonneur qui fusionne de manière dynamique et auto-adaptative des informations issues d'un ensemble de détecteurs d'anomalie, et qui ensuite fait un tri et synthétise les informations fusionnées.

L'étape E1 concerne l'obtention des mesures $x(\omega)$ lors d'une expérience $\omega \in \Omega$ sur des paramètres physiques relatifs à un sous-ensemble de composants d'un équipement tel qu'un moteur.

L'étape E2 concerne la définition d'un ensemble d'agents algorithmiques $a_1, ..., a_i, ..., a_n$ de détection d'anomalies, chacun des agents étant configuré pour recevoir des mesures sur les paramètres physiques pour calculer une distribution initiale de probabilité d'anomalie.

A l'étape E3, l'ensemble d'agents algorithmiques $a_1, ..., a_i, ... a_n$ délivrent un ensemble de distributions initiales de probabilité d'anomalie $P_{a_1}, ..., P_{a_i}, ..., P_{a_n}$.

L'étape E4 concerne l'acquisition des informations de retour d'expérience $R_e$ sur des fautes.

L'étape E5 concerne l'utilisation des informations de retour d'expérience ainsi que les distributions initiales de probabilité d'anomalie issues de l'ensemble d'agents de détection d'anomalies $a_1, ..., a_i, ..., a_n$ pour faire émerger des distributions courantes de probabilité d'anomalie en adéquation avec les informations de retour d'expérience.

Les distributions courantes de probabilité d'anomalie sont créées de manière itérative jusqu'à ce qu'elles convergent à l'étape E6 vers un ensemble de distributions optimales de probabilité d'anomalie $P_{a_{o1}}, ..., P_{a_{oi}}, ..., P_{a_{on_o}}$ en conformité avec les informations de retour d'expérience.

A l'étape E7, les distributions optimales de probabilité d'anomalie relatives à au moins un sous-ensemble d'intérêt de composants de l'équipement tel qu'un moteur sont synthétisées afin d'extraire des risques d'anomalie spécifique à ce sous-ensemble d'intérêt

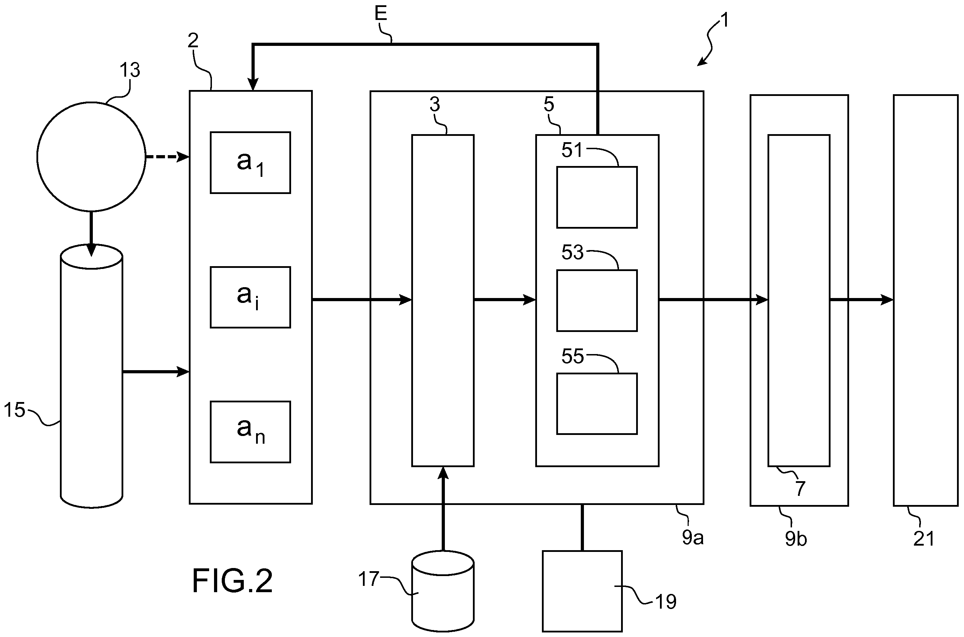

La Fig. 2 illustre de manière schématique un système de surveillance d'un ensemble de composants d'un équipement tel qu'un moteur, selon l'invention.

Ce système de surveillance 1 comporte des moyens de détection 2, des moyens d'acquisition 3, des moyens d'émergence 5, et des moyens de synthèse 7.

On notera que dans le cas d'un moteur d'aéronef, les moyens de détection 2 peuvent être intégrés en partie ou en totalité à un calculateur embarqué de contrôle du moteur. Par ailleurs, les moyens d'acquisition 3, d'émergence 5 et de synthèse 7 sont des modules numériques qui peuvent être intégrés à un même ou à différents ordinateurs ou systèmes informatiques 9a, 9b.

Les moyens de détection 2 comprennent un ensemble d'agents algorithmiques $a_1$, ..., $a_i$, ..., $a_n$ de détection d'anomalies qui sont configurés pour recevoir des mesures sur des paramètres physiques relatifs à un sous-ensemble de composants moteur et pour délivrer des distributions initiales de probabilité d'anomalie.

Un agent $a_i$ de détection d'anomalie comporte des fonctions algorithmiques. Ces fonctions comprennent par exemple une fonction pour initialiser l'état de l'agent, une autre pour faire le calibrage, d'autres fonctions pour la réception des données et l'exécution de l'algorithme et d'autres encore pour délivrer les résultats. Un agent de détection d'anomalie subit en général une phase d'apprentissage comprenant une procédure d'étalonnage. Les agents peuvent être lancés par les moyens de traitement du calculateur ou de l'ordinateur quand c'est nécessaire. L'agent de détection d'anomalie est configuré pour recueillir des mesures acquises par des capteurs sur le moteur 13 et son environnement. Plus particulièrement, ces données peuvent être acquises directement depuis le moteur 13 (flèche en pointillés) ou à partir d'une expérience $\omega \in \Omega$ de mesures issues d'une base de données 15.

L'agent $a_i$ calcule alors à partir de ces mesures, des indicateurs spécifiques à des composants du moteur 13 ou à des éléments logiques indiquant une tâche spécifique de tout un ensemble de composants du moteur 13. A titre d'exemple, un indicateur peut correspondre au délai nécessaire pour qu'un arbre du moteur atteigne l'accélération maximale après chaque démarrage du moteur, un autre indicateur peut être le gradient des températures des gaz d'échappement du moteur, etc.

Toutefois, chaque mesure peut être recueillie dans des conditions externes ou internes particulières. Ces conditions qui peuvent avoir un impact sur la lecture des indicateurs peuvent être mesurées et enregistrées en tant que données exogènes. Les conditions externes peuvent comprendre les températures et pressions extérieures, l'hygrométrie, etc. Les conditions internes peuvent concerner l'utilisation spécifique du moteur, par exemple la température d'huile juste avant le démarrage du moteur peut être considérée comme une donnée de contexte qui différencie deux types de démarrages (démarrage à froid ou démarrage à chaud).

Ainsi, ces indicateurs sont avantageusement standardisés, par exemple par une technique classique de normalisation en fonction d'une moyenne et d'un écart-type calculés a priori sur une série de données précédemment numérisées ou par d'autres méthodes identiques à celles décrites dans la demande de brevet WO20100764681 de la Demanderesse.

En outre, l'agent peut calculer des indicateurs de performances ou de qualité indiquant la fiabilité du résultat. Ces indicateurs de qualité peuvent être estimés par des modèles statistiques connus de validation croisée (par exemple, folding, bootstrap, leave-one-out) décrits par exemple dans la demande de brevet français FR2957170 de la Demanderesse.

Selon un premier exemple, l'indicateur de qualité peut correspondre à un indicateur d'adéquation AQV (Adequancy Quality Value) définissant la mesure d'une distance entre l'entrée de l'agent et une entrée de calibrage définie lors de l'apprentissage de l'agent.

Selon un autre exemple, l'indicateur de qualité correspond à un indicateur de robustesse MQV (Model Quality Value) mesurant une capacité d'utilisation de l'agent face à des nouvelles entrées. L'indicateur de robustesse MQV donne une information sur le fonctionnement de l'agent par rapport à des données générales et indique alors quelle doit être la qualité moyenne de l'agent lorsque des nouvelles données sont appliquées.

D'autres exemples d'indicateurs de qualité ou de performance comportent une probabilité de fausses alarmes PFA et un taux de détection POD. Ces indicateurs peuvent être mesurés avec le maximum de précision souhaité au vu du volume de données disponibles, On notera qu'il est possible de construire des agents dont le PFA est faible, La conséquence est juste que le POD ne sera pas très grand. Par exemple, des validations sur bancs d'essais ont montré que des POD de 40% à 50% sont tout à fait envisageables pour un PFA inférieur à 1%. Il est très coûteux de démonter un moteur pour rien, aussi, dans le domaine de l'aéronautique on se focalise certainement sur un taux de fausses alarmes PFA le plus faible possible.

Enfin, le résultat ou la sortie d'un agent $a_i$ consiste en une distribution de probabilité d'anomalie $P_{ai}$, qui reflète un comportement anormal du composant surveillé. Ainsi, la distribution de probabilité d'anomalie $P_{ai}$ peut être considérée comme une loi d'un score d'anomalie $S_{ai} = S_{ai}(\omega)$, où $S_{ai}(\omega)$ est une variable aléatoire calculée à partir des données faites sur une expérience $\omega \in \Omega$ des mesures issues de la base de données 15.

Ce résultat (*i.e.* la distribution de probabilité d'anomalie $P_{ai}$) comporte un risque d'anomalie et une mesure de la fiabilité ou de la précision (par exemple, PFA ou POD) de l'agent. En effet, pour un seuil de détection ou de déclenchement prédéterminé $\theta_{ai}$ dépendant de chaque agent $a_i$, on peut définir un risque d'anomalie $R_{ai}(\theta_{ai})$ et une précision $\sigma_{ai}(\theta_{ai})$ associée qui dépendent du seuil de détection $\theta_{ai}$, selon les formules suivantes:

$$R_{a_i}(\theta_{a_i}) = P\left(S_{a_i} > \theta_{a_i}\right) = P_{S_{a_i}}([\theta_{a_i}, +\infty[) \;;\; \text{et} \;\; \sigma_{a_i}(\theta_{a_i}) = \sigma(R_{a_i}(\theta_{a_i})).$$

La précision $\sigma_{a_i}(\theta_{a_i})$ peut être définie soit par un écart-type du risque d'anomalie $R_{a_i}(\theta_{a_i})$, soit par une validation croisée, ou soit directement par un modèle algorithmique.

Par ailleurs, chacun des agents $a_i$ est paramétré par une configuration particulière $p_{a_i}$ qui peut correspondre à un choix de paramètres (par exemple, un choix de facteur d'échelle), un choix d'entrées (par exemple, signaux temporels ou instantanés « snapshots »), ou un délai temporel, conduisant à ce que l'on appelle communément une instance de l'algorithme. Par souci de simplification de formulation, on considère que tous les agent $a_i$ sont différents.

Ainsi, chaque agent $a_i$ est défini selon le choix de l'algorithme $a$, sa configuration $p_{a_i}$ et son seuil de détection prédéterminé $\theta_{a_i}$. Chaque agent peut alors être noté de la manière suivante : $a_i = (a, p_{a_i}, \theta_{a_i})$.

Les moyens d'acquisition 3 sont configurés pour recevoir les distributions initiales de probabilité d'anomalie $P_{a_1}, \dots, P_{a_i}, \dots, P_{a_n}$ (i.e. les risques d'anomalie $R_{a_1}, \dots, R_{a_i}, \dots, R_{a_n}$ et les précisions correspondantes $\sigma_{a_1}, \dots, \sigma_{a_i}, \dots, \sigma_{a_n}$) issues de l'ensemble d'agents $a_1, \dots, a_i, \dots, a_n$ de détection d'anomalies ainsi que des informations de retour d'expérience 17.

Un retour d'expérience est donné par une expertise et le risque associé. Par exemple, le retour d'information pour un composant particulier peut se traduire par un risque d'anomalie d'expertise $R_e$ sur une faute définie à partir d'une expérience de mesures ainsi qu'une confiance correspondant à la précision que l'expert accorde à ce risque.

Les moyens d'émergence 5 utilisent alors les informations de retour d'expérience 17 et les distributions initiales de probabilité d'anomalie $P_{a_1}, \dots, P_{a_i}, \dots, P_{a_n}$ issues de l'ensemble d'agents $a_1, \dots, a_i, \dots, a_n$ afin de faire émerger de manière itérative des distributions courantes de probabilité d'anomalie $P_{a_{c1}}, \dots, P_{a_{ci}}, \dots, P_{a_{cn_c}}$ en adéquation avec les informations de retour d'expérience 17. Cette construction itérative permet aux distributions courantes de probabilité d'anomalie de converger vers un ensemble de distributions optimales de probabilité d'anomalie $P_{a_{o1}}, \dots, P_{a_{oi}}, \dots, P_{a_{on_o}}$ en conformité avec les informations de retour d'expérience 17.

Les moyens d'émergence 5 utilisent des techniques de fusions expertes faisant émerger une information pertinente à partir des données observées permettant d'améliorer fortement le taux de détection POD tout en gardant un faible taux de fausses alarmes PFA. En effet, les moyens d'émergence 5 vont pallier le faible taux de détection d'un agent $a_i$ par une observation simultanée d'une pluralité d'agents.

Plus particulièrement, les moyens d'émergence 5 comportent des fonctions ou moyens de fusion 51, d'optimisation 53, et de gestion 55.

Les moyens de fusion 51 sont configurés pour créer chaque distribution courante $P_{a_{ci}}$ ou optimale $P_{a_{oi}}$ de probabilité d'anomalie en fusionnant des distributions précédentes de probabilité d'anomalie selon des règles de fusion prédéterminées. L'opération de fusion revient à combiner des distributions de probabilité d'anomalie (ou plus particulièrement, des risques d'anomalie $R_{a_i}$) exploitant l'ensemble des données issues de l'ensemble des agents permettant ainsi de résoudre le problème de faible taux de détection.

Ainsi, des risques d'anomalie peuvent être fusionnés entre eux par des opérations de réduction (par exemple, une moyenne, une régression, ou un réseau de neurones) pour construire un nouveau risque d'anomalie $R_{a_i'}$ noté de la manière suivante:

$$R_{a_i'} = \Phi_{a_i'}\left(R_{a_1}, R_{a_2}, \dots, R_{a_n}\right)$$

où $\Phi_{a_i'}$ est une opération de fusion qui peut être une règle métier, une logique bayésienne, une logique floue, un mécanisme de vote, ou un résultat d'apprentissage.

Les risques d'anomalie de fusion $R_{a'_1}, \dots, R_{a'_i}, \dots, R_{a'_n}$ peuvent aussi servir d'entrée à d'autres opérations successives de fusion, créant ainsi un graphe orienté:

$$R_{a_i''} = \Phi_{a_i''}\left(R_{a'_1}, \dots, R_{a'_i}, \dots, R_{a'_n}\right)$$

La manipulation de l'ensemble de risques d'anomalie doit normalement tenir compte de la gestion des relations dans le graphe orienté. Par exemple, la suppression d'un risque d'anomalie peut entraîner la suppression d'une branche du graphe. On notera que par la suite, on ne fera plus la distinction entre un risque d'anomalie issu d'un agent initial ou d'une fusion.

Par ailleurs, les moyens d'optimisation 53 sont configurés pour mettre en adéquation chaque distribution initiale ou courante de probabilité d'anomalie (i.e., des risques initiaux ou courants d'anomalie et les précisions correspondantes) avec l'information de retour d'expérience qui lui correspond, afin de lui associer une valeur d'efficacité. Par exemple, la valeur d'efficacité peut être définie à partir d'une distance entre un risque d'anomalie $R_{a_i}$ issu d'un agent et le risque d'anomalie d'expertise $R_e$ qui lui correspond. L'optimisation conduit ainsi à une amélioration continue de l'efficacité du résultat de la fusion par rapport au retour d'expérience,

Avantageusement, les moyens d'optimisation 53 sont en outre configurés pour ajuster les règles de fusion en fonction des informations de retour d'expérience. En effet, on peut utiliser un outil de projection de type régression sur les informations de retour d'expérience pour moduler les règles de fusion.

En outre, les moyens de gestion 55 sont configurés pour faire évoluer l'ensemble d'agents vers une population optimale d'agents en créant de nouveaux agents $a_1$, ..., $a_n$, $a'_1$, ..., $a'_i$, ..., $a'_n$, ..., $a_i''$, ... correspondants aux distributions courantes et optimales de probabilité d'anomalie et en sélectionnant les agents les plus conformes avec les informations de retour d'expérience. Cette sélection peut être basée sur les valeurs d'efficacité associées aux distributions courantes et optimales de probabilité d'anomalie. L'évolution des agents est représentée sur la Fig. 1 par une flèche de retour E modélisant le transfert de l'efficacité vers les moyens de détection 2 permettant ainsi une optimisation des agents algorithmiques $a_i = (a, p_{a_i}, \theta_{a_i})$ pour une sélection de meilleurs algorithmes, paramètres, configuration ou seuils.

Afin de découvrir une configuration optimale et/ou un paramétrage adapté, il est avantageux d'utiliser un grand nombre d'agents réglés différemment, mais que l'on confronte les uns aux autres. Une technique stochastique de type « algorithme génétique » permet à ces agents d'échanger leurs « points de vue » pour finalement converger vers une population de plus en plus efficace. L'apprentissage quant à lui dépend des informations de retour d'expériences qui sont régulièrement mises à jour par les experts ou opérateurs de maintenance. A partir de ces informations, les agents peuvent se calibrer automatiquement. On notera qu'un algorithme génétique est adapté pour augmenter la population d'agent en en créant de nouveaux. On rappellera que les agents sont des instances algorithmiques définies par des algorithmes, des configurations, des paramétrages, des seuils de détection (ou de déclenchement), et des délais (par exemple, un paramètre de l'agent pouvant consister à prendre une valeur passée et non pas la dernière valeur calculée). Ainsi, les nouveaux agents peuvent être créés par des opérations de mutations algorithmiques en modifiant les paramètres d'une instance, ou son seuil de déclenchement. Ils peuvent aussi être créés par des opérations de croisements algorithmiques en mélangeant de façon intelligente des paramètres d'agents compatibles (par exemple une optimisation de délai, d'échelle, etc.). D'autres créations peuvent être réalisées par des mutations logiques en modifiant les paramètres des règles d'un opérateur de fusion ou par des croisements logiques en combinant adroitement plusieurs opérateurs de fusion. Les nouveaux agents peuvent aussi être créés en sélectionnant de manière aléatoire des couples d'agents à partir de l'ensemble initial d'agents pour générer des agents enfants.

Ensuite, les moyens d'émergence 5 calculent les valeurs d'efficacité associés à tous ces nouveaux agents et réalisent une pression de sélection pour ne retenir de la population globale que les meilleurs tout en conservant une structure du graphe cohérente. On notera qu'il est possible d'utiliser d'autres méthodes d'optimisation basées sur des outils interactifs dédiés aux experts.

Ainsi, en gérant l'ensemble d'agents qu'il modifiera au fil de l'arrivée de nouvelles informations de retour d'expérience, les moyens de gestion 55 permettent de repérer automatiquement des nouvelles configurations auxquelles on n'aura pas nécessairement pensé et qui s'adaptent mieux à chaque situation courante. Une nouvelle configuration peut correspondre à un nouveau choix des entrées d'un agent, des nouveaux paramètres de traitement de l'agent, ou une nouvelle sélection d'observations pour le calibrage de l'agent.

Prenons l'exemple d'un nouveau moteur d'aéronef que l'on souhaite surveiller. Les techniques actuelles consistent à utiliser une série d'algorithmes prédéfinis et validés par des experts métiers. Ces algorithmes sont à usage transversal, et ils s'appliquent à tout type de moteur, mais ils ne sont pas spécialisés pour ce moteur particulier. En outre, on dispose aussi de détecteurs d'anomalies (de fonctionnement inusuel) complètement génériques, mais qui ne sont que peu performants à l'initialisation car ils ont été calibrés de façon générale pour tout type de moteur d'aéronef.

Or, un nouveau moteur, même s'il obéit aux critères d'expertise d'un document établi par les experts moteur appelé AMDEC (Analyse des modes de défaillance, de leurs effets et de leur criticité) spécifiant les probabilités d'occurrence de chaque défaillance, ne montrera pas une succession de défauts absolument génériques. Les problèmes rencontrés dépendront de la conception du moteur (sa fabrication, les lots des pièces, etc.) de son exploitation et des conditions de vol rencontrées. Ainsi les défaillances les plus probables ne seront pas forcément celles indiquées génériquement par l'AMDEC, mais des conséquences de l'environnement.

En gérant une population de ces détecteurs que l'on fait évoluer suivant une technique stochastique, il est alors possible de faire émerger des configurations adaptées non seulement à ce moteur particulier, mais aussi de construire un système complet capable de s'adapter au cours du temps aux événements les plus intéressants. Ainsi, une application dynamique et auto-adaptative qui module globalement l'ensemble des agents servant à diagnostiquer le moteur aura donc beaucoup plus de chance de cibler les dégradations les plus probables.

Finalement, les moyens de synthèse 7 sont configurés pour synthétiser des distributions optimales de probabilité d'anomalie relatives à au moins un sous-ensemble d'intérêt de composants moteur afin d'extraire des risques d'anomalie spécifiques au sous-ensemble d'intérêt. De cette manière, on focalisera les informations relatives à un sous-ensemble particulier de composants pour l'aide à la décision concernant les opérations de maintenance. Par exemple, les distributions optimales de probabilité d'anomalie peuvent être synthétisées sous forme de diagrammes en bâtonnets présentant le risque sur chaque composant moteur considéré.

Avantageusement, les moyens d'émergence 5 sont en outre configurés pour associer à chaque distribution initiale, courante ou optimale de probabilité d'anomalie relative à un sous-ensemble de composants moteur, un vecteur d'implication reflétant la contribution de chaque élément du sous-ensemble sur la distribution de probabilité d'anomalie correspondante.

En effet, le moteur 13 ou l'ensemble de composants moteur surveillé est constitué de sous-ensembles combinant à l'origine des composants physiques, où chacun est susceptible de produire certaines fautes. Chaque agent a une contribution dans la surveillance de chacune de ces fautes. On suppose que le nombre total de fautes $f$ à surveiller est fini et vaut $K$. On peut alors définir un vecteur d'implications $\xi^a$ pour chaque distribution de probabilité d'anomalie de la manière suivante :

$$\xi^a = (\xi_1^a, \ldots, \xi_f^a \ldots \xi_K^a) \text{ avec } \sum_f \xi_f^a = 1.$$

Le vecteur d'implication initiale est défini comme une entrée donnée par les experts pour les agents initiaux (i.e., $\xi^a = \xi^{R_a}$). Par la suite, chaque vecteur d'implication est calculé pour chaque opération de fusion, par une méthode adaptée qui peut être déterminée par une règle experte ou qui peut être apprise à partir des données. Le vecteur d'implication peut être vu comme une probabilité a priori de correspondance du risque d'anomalie pour l'estimation d'une faute sur un composant.

On notera que l'implication peut bien entendu avoir un effet sur l'optimisation ou l'amélioration de l'efficacité globale de la population d'agents. En effet, le retour d'expérience est donné par une expertise $e$ et un risque $R_e$ associé sous la forme d'un vecteur d'implication d'expertise $\xi^e = (\xi_1^e, \ldots \xi_K^e)$. Ce vecteur précise sur quelles fautes l'expertise $e$ porte. Par exemple, un avis sur une expérience $\omega$ de mesures donné par un expert et portant sur un sous-ensemble de composants particuliers pour la détection d'une faute $f'$ bien définie est pondéré par un vecteur d'implication dont les coordonnées sont nulles sauf pour la coordonnée $f'$ qui vaut 1. L'expert regarde ensuite les mesures $X(\omega)$ ($X$ étant le vecteur des mesures stockées dans la base de données et $x = X(\omega)$ correspondant à un ensemble de valeurs) et donne une réponse $R_e(\omega)$ plus ou moins tranchée sur cette faute. Par exemple $R_e(\omega) = 1$ si l'expert observe qu'il y a faute et $R_e(\omega) = 0$ sinon. Dans d'autres cas, l'expert pourra être moins catégorique en proposant une valeur intermédiaire ainsi qu'une confiance $\sigma_e(\omega)$ correspondant à la précision qu'il accorde à son observation. Ainsi, l'expert va aider au calibrage du système de surveillance.

En outre, l'efficacité d'un agent est obtenue sur la base des expertises disponibles selon une distance $d_a$ entre le risque $R_a$ issu de l'agent et les risques d'expertise $R_e$ qui font intervenir les vecteurs d'implications et les vecteurs d'implications d'expertise et la valeur de confiance $\sigma_\varepsilon$ ; par exemple de la manière suivante :

$$d_a^2 = \sum_e \frac{(R_a - R_e)^2}{\sigma_e^2} \, \xi^a, \xi^e$$

Plus cette distance est petite, plus l'agent est efficace.

Ceci permet aux moyens de synthèse 7 de synthétiser les distributions optimales de probabilité d'anomalie relatives au sous-ensemble d'intérêt en pondérant l'influence de chaque élément du sous-ensemble d'intérêt selon les vecteurs d'implication correspondants et les confiances apportées aux expertises. Chacun des agents de détections d'anomalie peut être lié à un ou plusieurs sous-ensembles de composants moteur par l'intermédiaire des données observées ou des indicateurs calculés. Il est donc possible de réaliser des synthèses basées sur les composants surveillés.

Ainsi, grâce aux contributions représentées par le vecteur d'implications associé à chaque distribution de probabilité d'anomalie (ou risque d'anomalie), les moyens de synthèse construisent une synthèse par projection sur chacun des sous-ensembles de composants et/ou chacun des fautes. Par exemple, la formule suivante est une simple projection linéaire sur un sous-ensemble, un composant, ou une faute :

$$\bar{R}_\zeta = \sum_{f \in \zeta} \frac{\pi_f^\zeta}{Z_f} \sum_a \xi_f^a R_a \quad \text{avec } Z_f = \sum_a \xi_f^a$$

où $\zeta$ = {liste des fautes à surveiller}, $\pi^\zeta = (\pi_1^\zeta, ..., \pi_K^\zeta)$ est le vecteur des contributions de chaque faute associée au sous-ensemble $\zeta$ avec $\sum_f \pi_f^\zeta = 1$ (qui est en général obtenu par des a priori fournis par l'AMDEC).

Avantageusement, le système de surveillance 1 comporte une interface homme-machine 19 permettant aux experts de donner leurs avis pendant les phases d'utilisation du système de surveillance.

En outre, le système de surveillance peut comporter des moyens d'aide à la décision 21 (par exemple, un outil de localisation de pannes « troubleshooting », des affichages spécifiques, etc.) qui permettent de déterminer les opérations de maintenance en fonction des risques d'anomalies. Les moyens d'aide à la décision 21 reçoivent en entrée les risques d'anomalies et les liens sur les différents sous-ensembles de composants moteur et délivrent en sortie les opérations de maintenance à réaliser en tenant compte de toutes les opérations possibles et de leurs coûts,

Les Figs. 2A-2D illustrent de manière schématique des exemples de fusion dans un système de surveillance d'un ensemble de composants d'un équipement tel qu'un moteur d'aéronef, selon Invention.

La base de données 15 comporte des données et mesures concernant un moteur d'aéronef et son environnement, reçues depuis l'aéronef 31.

Les moyens de détection 2 comprennent un ensemble d'agents initiaux de détection d'anomalies. On notera qu'en aéronautique, on dispose d'une pluralité d'algorithmes génériques de détection d'anomalies qui ne sont pas supervisés a priori. Ces algorithmes génériques peuvent être découplés en les adaptant à tout type de signaux (temporels, snapshots, etc.) ou avec des paramètres différents (contexte, valeurs suivies, facteurs d'échelle, etc.), mais aussi avec des données de calibrages différentes. Ainsi, on peut mettre en oeuvre de nombreux agents pour former l'ensemble d'agents initiaux de détection d'anomalies.

Les différents agents reçoivent les mesures concernant le moteur afin de calculer et délivrer en sortie des distributions initiales de probabilité d'anomalie définissant des risques d'anomalie et des indicateurs de qualité correspondants.

On notera que l'ensemble des agents reçoivent les données relatives au moteur à surveiller pour détecter une anomalie sur ce moteur ou sur un sous-système du moteur. Toutefois, les agents de détection d'anomalie peuvent avoir été calibrés à partir des données issues d'une flotte de moteurs. En outre, certains agents peuvent par exemple utiliser les données de deux moteurs d'un même aéronef afin de comparer ces données entre elles, De plus, certains agents peuvent comparer les données du moteur à surveiller à des données stockées en mémoire relatives à une flotte de moteurs.

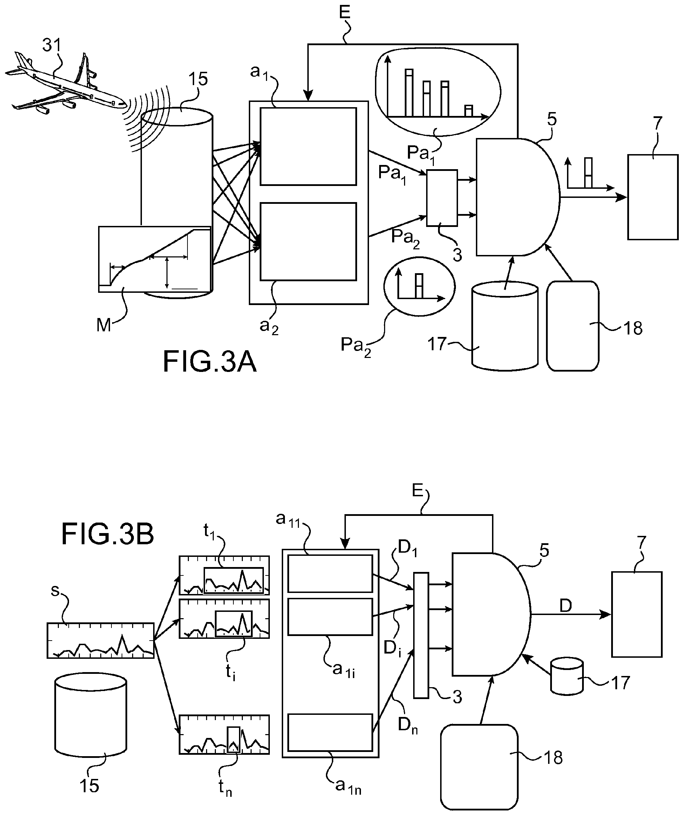

Chaque exemple des Figs. 3A-3D met en oeuvre plusieurs agents (ou instances) d'un ou de plusieurs algorithmes.

Les moyens d'émergence 5 reçoivent via les moyens d'acquisition 3, les distributions initiales de probabilité d'anomalie issues de l'ensemble d'agents de détection d'anomalies. Ils disposent également des données ou règles expertes 18 définissant les règles de fusion et des informations de retour d'expérience 17 permettant d'ajuster les règles de fusion et contribuant surtout à définir l'efficacité de la fusion.

Les moyens d'émergence 5 fusionnent les distributions initiales de probabilité d'anomalie pour faire émerger de manière itérative des distributions courantes correspondantes à des nouveaux agents qui s'amplifient par la fusion. Les moyens d'émergence 5 sélectionnent les agents les plus en adéquation avec le retour d'expérience pour les faire converger vers une population d'agents plus efficace améliorant ainsi la probabilité de détection des anomalies et la robustesse de la surveillance,

L'exemple de Fig. 3A concerne la surveillance de la capacité de démarrage d'un moteur d'aéronef. Selon cet exemple, les moyens de détection 2 comportent deux agents de détection d'anomalie $a_1$, $a_2$. Un premier agent $a_1$ qui analyse les mesures M pour déterminer si le moteur peut démarrer et un deuxième agent $a_2$ qui évalue la qualité des mesures $M$ utilisées par le premier agent $a_1$. Par exemple cette qualité peut dépendre de la proportion de valeurs manquantes ou du nombre de données aberrantes (« outliers »).

Les moyens d'émergence 5 prennent en entrée une première distribution de probabilité d'anomalie $P_{a_1}$ (i.e. un premier risques d'anomalie $R_{a_1}$ et une première précision correspondante $\sigma_{a_1}$) évaluant si le moteur peut démarrer ou non et une deuxième distribution de probabilité d'anomalie $P_{a_2}$ (i.e, un deuxième risque d'anomalie $R_{a_2}$ et une deuxième précision correspondante $\sigma_{a_2}$) liée à la qualité des mesures.

En outre, les moyens d'émergence 5 prennent aussi en entrée des règles expertes 18 définissant le principe de fusion ainsi que des informations de retour d'expérience 17 permettant de mesurer la précision ou l'efficacité des

agents $a_1$ , $a_2$ dont on utilise les résultats.

Les moyens d'émergence 5 fusionnent les première $P_{a_1}$ et deuxième $P_{a_2}$ distributions de probabilité d'anomalie selon les règles expertes 18 de fusion pour faire émerger des distributions courantes de probabilité d'anomalie évaluant la capacité à démarrer le moteur et l'efficacité de la fusion en tenant compte des informations de retour d'expérience 17. Les distributions courantes de probabilité d'anomalie sont ainsi modulées à partir des informations issues à la fois de la capacité à démarrer et des différentes mesures qui servent à évaluer cette capacité à démarrer.

Les règles expertes 17 de fusion peuvent par exemple agir sur la précision en fonction du risque d'anomalie liée à la qualité de chaque mesure, Par exemple, on peut avoir une règle de réduction de type « moyenne de la manière suivante : si la moyenne des risques d'anomalie liés à la qualité des mesures dépasse un premier seuil prédéterminé M1, alors la valeur d'efficacité diminue d'une première valeur D1, et si la moyenne des risques d'anomalie liés à la qualité des mesures est entre le premier seuil M1 et un deuxième seuil prédéterminé M2, alors la valeur d'efficacité diminue d'une deuxième valeur D2, etc,

Les moyens d'émergence 5 sélectionnent ensuite les distributions courantes de probabilité d'anomalie présentant les meilleures valeurs d'efficacité pour faire émerger des agents présentant une implication complète et très liés à la capacité à démarrer du moteur.

La Fig. 3B illustre un exemple où on applique un même algorithme sur un signal temporel mais à différents instants.

Les moyens de détection comportent un ensemble d'agents $a_{11}$, ..., $a_{1i}$, ..., $a_{1n}$ correspondant en réalité à une même instance mais avec des configurations différentes. Tous les agents reçoivent le même signal $S$ et chaque agent détermine l'instant $t_i$ analysé dans le signal. Ceci permet de diagnostiquer le signal à différents instants successifs $t_1$, ... $t_i$, ... , $t_n$ afin de confirmer une anomalie,

L'ensemble d'agents $a_{11}$,..., $a_{1i}$, ... , $a_{1n}$ génère un ensemble de résultats $D_1$, ... , $D_i$, ... , $D_n$ correspondant à un ensemble de configurations de probabilité d'anomalie $P_{a_{11}}$, ... , $P_{a_{1i}}$, ... , $P_{a_{1n}}$.

Les moyens d'émergence 5 prennent en entrée l'ensemble des résultats $D_1$, ... , $D_i$, ... , $D_n$ ainsi que les règles expertes 18 de fusion et les informations de retour d'expérience 17. Ils appliquent une règle experte pour fusionner les différents résultats afin de mesurer une persistance permettant de confirmer un diagnostic. A l'aide du retour d'expérience 17, l'efficacité mesurée peut ajuster les règles expertes ou modifier la configuration des agents pour optimiser le résultat du processus de fusion.

A titre d'exemple, la règle experte de fusion est formulée de manière à confirmer un diagnostic de détection d'anomalie uniquement si la somme des détections est supérieure à un certain seuil prédéterminé d'alerte $A$, selon la formule suivante :

$$\text{Si} \sum_{j=n-k+1}^{n} D(t_j) > A, \text{ alors } D = 1; \text{ sinon, } D = 0$$

où $D(t_j)$ est le résultat de détection d'anomalie de l'agent $a_{1i}$ avec la configuration de l'instant $t_i$ et où $D$ est le résultat final. Ce type de fusion opère une confirmation de la détection tout en diminuant le taux de fausses alarmes.

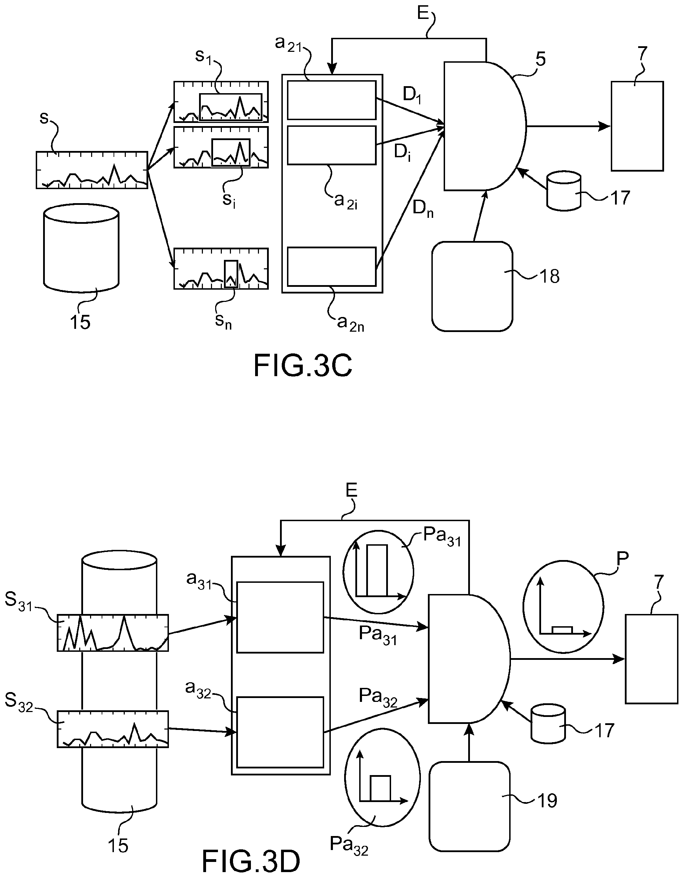

La Fig. 3C illustre un autre exemple similaire à celui de l'exemple de la Fig. 3B, à part le fait que dans cet exemple, le signal d'entrée $S$ est analysé sur différentes échelles $s_1$, ... $s_i$, ... , $s_n$ et non pas à différents instants.

Les moyens de détection 2 comportent un ensemble d'agents $a_{21}$, ..., $a_{2i}$, ..., $a_{2n}$ correspondant à une même instance mais avec des configurations différentes. Tous les agents reçoivent le même signal $S$ et chaque agent détermine l'échelle $s_i$ ou la fenêtre analysée dans le signal. Ceci permet de diagnostiquer le signal à différentes échelles $s_1$, ..., $s_i$, ..., $s_n$ afin de confirmer une anomalie.

L'ensemble d'agents $a_{21}$, ..., $a_{2i}$, ..., $a_{2n}$ génère un ensemble de résultats $D_1$, ..., $D_i$, ..., $D_n$ correspondants à un ensemble de configurations de probabilité d'anomalie $P_{a_{21}}$, ..., $P_{a_{2i}}$, ..., $P_{a_{2n}}$. Les moyens d'émergence 5 prennent en entrée l'ensemble de ces résultats ainsi que les règles expertes 18 de fusion et les informations de retour d'expérience 17, et appliquent par exemple, la même règle experte décrite en référence à l'exemple de la Fig. 2B pour fusionner les différents résultats.

La Fig. 3D illustre un exemple où on applique deux instances différentes. Les moyens de détection comportent des premier et deuxième agents $a_{31}$, $a_{32}$ correspondants à deux instances différentes et chaque agent prend en entrée un signal différent $S_{31}$, $S_{32}$. Les deux agents délivrent des première et deuxième distributions de probabilité d'anomalie $Pa_{31}$, $P_{a_{32}}$.

Les deux distributions de probabilité d'anomalie $P_{a_{31}}$, $P_{a_{32}}$ sont fusionnées par les moyens d'émergence 5 selon une règle floue qui peut être imposée de l'extérieur par les règles expertes 18 ou optimisée de manière automatique grâce au retour d'expérience 17. A la fin, émerge une distribution globale de probabilité d'anomalie P en conformité avec les informations de retour d'expérience.

Par ailleurs, les moyens de synthèse 7 du système de surveillance 1 de chacun des exemples précédents synthétisent les distributions globales ou optimales de probabilité d'anomalie relatives à un composant ou un sous-système de composants du moteur afin d'extraire les risques d'anomalie spécifiques à ce dernier. Dans le cas d'un sous-système de composants du moteur, les distributions optimales de probabilité d'anomale relatives au sous-système de composants sont synthétisées en pondérant l'influence de chaque composant de ce sous-système selon des vecteurs d'implication correspondants.

On notera que tous les risques sont calculés par moteur sur toute une flotte de moteurs et qu'il est donc naturellement possible de faire une synthèse globale par aéronef, Dans ce cas, la liste des fautes à surveiller $\zeta$ correspond à toutes les fautes de tous les composants des moteurs d'un aéronef. Ainsi, tous les résultats de calculs de risques sur tous les moteurs peuvent être capitalisés par un risque global $R$. Les fautes $\zeta$ sont ainsi liées à des moteurs donnés

$$\zeta = \{f_{m_1}^1, f_{m_2}^1, \cdots, f_{m_2}^1, f_{m_2}^2, \cdots\} \text{ où } f_{m_i}^j \text{ la faute de type } f^j \text{ associée au moteur } m_i.$$

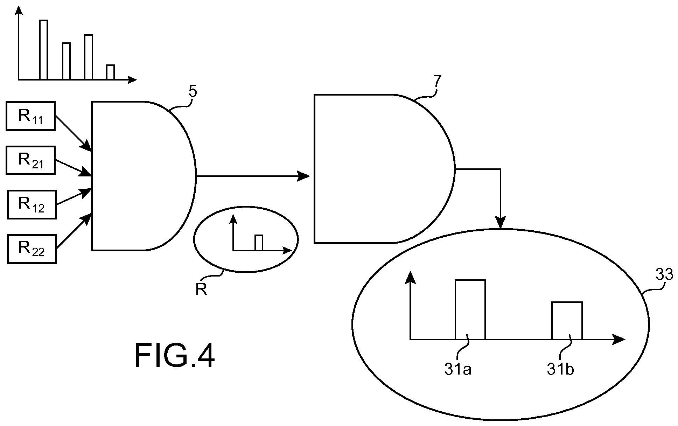

La Fig. 4 illustre de manière schématique un exemple particulier de synthèse selon le système de surveillance de la présente invention.

Selon cet exemples, la synthèse peut-être vue comme un outil visuel d'extraction de données « visual datamining » dans le sens où cette synthèse consiste à projeter le risque global d'anomalie $R$ issu des moyens d'émergence 5 sur un sous-espace d'intérêt permettant d'avoir une visualisation des résultats. Ici, les distributions optimales de probabilités d'anomalies sont synthétisées par des techniques de réduction (par exemple, une méthode de régression) en utilisant différents espaces (par exemple, aéronef, moteur, banc d'essai, dates, système, algorithme, observations, etc.) et la notion d'implication permettant de pondérer l'influence de chaque distribution optimale de probabilité d'anomalie,

Par exemple dans un sous-espace unidimensionnel, on peut obtenir un diagramme en bâton présentant le risque d'anomalie de chaque variable considérée, Dans le cas où l'on veut détecter des pannes sur plusieurs moteurs de différents aéronefs, et qu'on souhaite repérer les aéronefs présentant un plus grand risque, alors on projette la distribution optimale de probabilité d'anomalie issue de la fusion sur l'espace des aéronefs pour visualiser le risque d'anomalie par aéronef.

Plus particulièrement, l'exemple illustré par la Fig. 3 montre que les moyens d'émergence 5 prennent en entrée des premier et deuxième risques d'anomalie $R_{11}$, $R_{21}$ évaluant les risques d'anomalie des premier et deuxième moteurs d'un premier aéronef ainsi que des troisième et quatrième risques d'anomalie $R_{12}$, $R_{22}$ évaluant les risques d'anomalie des premier et deuxième moteurs d'un deuxième aéronef. Le risque global $R$ issu des moyens d'émergence 5 est projeté par les moyens de synthèse 7 sur l'espace 33 des aéronefs pour visualiser le risque d'anomalie pour chaque aéronef 31a et 31b.

## Revendications

1. Système de surveillance d'un ensemble de composants d'un équipement tel qu'un moteur et notamment un moteur d'aéronef, comportant :

    - des moyens de détection (2) comprenant un ensemble d'agents de détection d'anomalies ($a_1$, ..., $a_i$, ..., $a_n$), chacun desdits agents étant configuré pour recevoir des mesures sur des paramètres physiques relatifs à un sous-ensemble de composants dudit équipement et pour délivrer une distribution initiale de probabilité d'anomalie,
    - des moyens d'acquisition (3) configurés pour recevoir des informations de retour d'expérience (17) donné par une expertise et un risque associé, ainsi que les distributions initiales de probabilité d'anomalie issues dudit ensemble d'agents,des moyens d'émergence (5) configurés pour faire émerger de manière itérative des distributions courantes de probabilité d'anomalie en adéquation avec lesdites informations de retour d'expérience, lesdites distributions courantes de probabilité d'anomalie convergeant vers un ensemble de distributions optimales de probabilité d'anomalie en conformité avec lesdites informations de retour d'expérience,
    - des moyens de synthèse (7) configurés pour synthétiser des distributions optimales de probabilité d'anomalie relatives à au moins un sous-ensemble d'intérêt de composants dudit équipement afin d'extraire des risques d'anomalie spécifique audit sous-ensemble d'intérêt, et
    - des moyens d'aide (21) à la décision qui permettent de déterminer les opérations de maintenance en fonction des risques d'anomalies.

2. Système selon la revendication 1, **caractérisé en ce que** les moyens d'émergence comportent :

    - des moyens de fusion (51) configurés pour créer chaque distribution courante ou optimale de probabilité d'anomalie en fusionnant des distributions précédentes de probabilité d'anomalie selon des règles de fusion prédéterminées,

- des moyens d'optimisation (53) configurés pour mettre en adéquation chaque distribution initiale ou courante de probabilité d'anomalie avec l'information de retour d'expérience qui lui correspond, afin de lui associer une valeur d'efficacité, et

- des moyens de gestion (55) configurés pour faire évoluer l'ensemble d'agents vers une population optimale d'agents en créant de nouveaux agents correspondants aux distributions courantes et optimales de probabilité d'anomalie et en sélectionnant les agents les plus conformes avec les informations de retour d'expérience selon les valeurs d'efficacité associées auxdites distributions courantes et optimales de probabilité d'anomalie.

3. Système selon la revendication 1 ou 2, **caractérisé en ce que** les moyens d'émergence (5) sont en outre configurés pour associer à chaque distribution initiale, courante ou optimale de probabilité d'anomalie relative à un sous-ensemble de composants dudit équipement, un vecteur d'implication reflétant une contribution de chaque élément dudit sous-ensemble sur la distribution de probabilité d'anomalie correspondante.

4. Système selon la revendication 3, **caractérisé en ce que** les moyens de synthèse (7) sont configurés pour synthétiser les distributions optimales de probabilité d'anomalie relatives audit sous-ensemble d'intérêt en pondérant l'influence de chaque élément dudit sous-ensemble d'intérêt selon les vecteurs d'implication correspondants.

5. Système selon la revendication 2, **caractérisé en ce que** les règles de fusion prédéfinies sont choisies parmi les règles suivantes : règles expertes, règles de réduction, règles de vote, règles métiers, règles bayésiennes, et règles de logique floue.

6. Système selon la revendication 2, **caractérisé en ce que** les moyens d'optimisation (53) sont en outre configurés pour ajuster les règles de fusion en fonction des informations de retour d'expérience.

7. Système selon l'une quelconque des revendications 2 à 6, **caractérisé en ce que** l'ensemble d'agents ou la population optimale d'agents est formé par des instances d'algorithmes comprenant des choix de mesures différents, ou des méthodes de traitement différentes, ou des paramétrages différents.

8. Système selon l'une quelconque des revendications précédentes, **caractérisé en ce que** les distributions initiales de probabilité d'anomalie sont standardisées par rapport au contexte des mesures.

9. Procédé de surveillance d'un ensemble de composants d'un équipement tel qu'un moteur et notamment un moteur d'aéronef, comportant les étapes suivantes :

- acquérir des informations de retour d'expérience donné par une expertise et un risque associé, ainsi que des distributions initiales de probabilité d'anomalie issues d'un ensemble d'agents de détection d'anomalies, chacun desdits agents étant configuré pour recevoir des mesures sur des paramètres physiques relatifs à un sous-ensemble de composants dudit équipement avant de délivrer une distribution initiale de probabilité d'anomalie,

- faire émerger de manière itérative des distributions courantes de probabilité d'anomalie en adéquation avec lesdites informations de retour d'expérience, lesdites distributions courantes de probabilité d'anomalie convergeant vers un ensemble de distributions optimales de probabilité d'anomalie en conformité avec lesdites informations de retour d'expérience,

- synthétiser des distributions optimales de probabilité d'anomalie relatives à au moins un sous-ensemble d'intérêt de composants dudit équipement afin d'extraire des risques d'anomalie spécifique audit sous-ensemble d'intérêt, et

- déterminer les opérations de maintenance en fonction des risques d'anomalies.

**Patentansprüche**

1. System zur Überwachung einer Gruppe von Komponenten eines Geräts wie zum Beispiel eine<ins>http://ml.gala-news.fr/l2/6tyihPWZV12/6812357/689111529.html</ins>s Motors und insbesondere eines Motors eines Luftfahrzeugs, umfassend:

- Erfassungsmittel (2), umfassend eine Gruppe von Anomalieerfassungsagenten ($a_1$, ..., $a_i$, ..., $a_n$), wobei jeder der Agenten dazu ausgelegt ist, Messwerte von physikalischen Parametern bezüglich einer Untergruppe von Komponenten des Geräts zu empfangen und eine anfängliche Anomaliewahrscheinlichkeitsverteilung zu liefern,
- Sammelmittel (3), die dazu ausgelegt sind, Feedbackinformationen (17), gegeben durch eine Expertise und ein zugeordnetes Risiko, sowie die anfänglichen Anomaliewahrscheinlichkeitsverteilungen zu empfangen, die von der Gruppe von Agenten stammen, Notfallmittel (5), die dazu ausgelegt sind, auf iterative Weise momentane Anomaliewahrscheinlichkeitsverteilungen in Übereinstimmung mit den Feedbackinformationen zu liefern, wobei die momentanen Anomaliewahrscheinlichkeitsverteilungen zu einer Gruppe von optimalen Anomaliewahrscheinlichkeitsverteilungen in Übereinstimmung mit den Feedbackinformationen konvergieren,
- Synthesemittel (7), die dazu ausgelegt sind, optimale Anomaliewahrscheinlichkeitsverteilungen bezüglich wenigstens einer interessierenden Untergruppe von Komponenten des Geräts zu synthetisieren, um Anomalierisiken zu extrahieren, die für die interessierende Untergruppe spezifisch sind, und
- Entscheidungshilfsmittel (21), die es ermöglichen, die Instandhaltungsoperationen als Funktion der Anomalierisiken zu bestimmen.

2.  System nach Anspruch 1, **dadurch gekennzeichnet, dass** die Notfallmittel umfassen:

    - Fusionsmittel (51), die dazu ausgelegt sind, jede momentane oder optimale Anomaliewahrscheinlichkeitsverteilung durch Fusionieren von vorhergehenden Anomaliewahrscheinlichkeitsverteilungen gemäß vorbestimmten Fusionsregeln zu erzeugen,
    - Optimierungsmittel (52), die dazu ausgelegt sind, jede anfängliche oder momentane Anomaliewahrscheinlichkeitsverteilung in Übereinstimmung mit der ihr entsprechenden Feedbackinformation zu bringen, um ihr einen Effizienzwert zuzuordnen, und
    - Verwaltungsmittel (55), die dazu ausgelegt sind, die Gruppe von Agenten zu einer optimalen Population von Agenten entwickeln zu lassen durch Erzeugen von neuen Agenten entsprechend den momentanen und optimalen Anomaliewahrscheinlichkeitsverteilungen, und durch Auswählen der Agenten mit der größten Übereinstimmung mit den Feedbackinformationen gemäß den Effizienzwerten, die den momentanen und optimalen Anomaliewahrscheinlichkeitsverteilungen zugeordnet sind.

3.  System nach Anspruch 1 oder 2, **dadurch gekennzeichnet, dass** die Notfallmittel (5) ferner dazu ausgelegt sind, jeder anfänglichen, momentanen oder optimalen Anomaliewahrscheinlichkeitsverteilung bezüglich einer Untergruppe von Komponenten des Geräts einen Implikationsvektor zuzuordnen, der einen Beitrag jedes Elements der Untergruppe zu der entsprechenden Anomaliewahrscheinlichkeitsverteilung reflektiert.

4.  System nach Anspruch 3, **dadurch gekennzeichnet, dass** die Synthesemittel (7) dazu ausgelegt sind, die optimalen Anomaliewahrscheinlichkeitsverteilungen bezüglich der interessierenden Untergruppe zu synthetisieren, indem der Einfluss jedes Elements der interessierenden Untergruppe gemäß den entsprechenden Implikationsvektoren gewichtet wird.

5.  System nach Anspruch 2, **dadurch gekennzeichnet, dass** die vordefinierten Fusionsregeln ausgewählt sind aus den folgenden Regeln: Expertenregeln, Reduktionsregeln, Abstimmungsregeln, Besetzungsregeln, Bayesregeln, und Fuzzy-Logic-Regeln.

6.  System nach Anspruch 2, **dadurch gekennzeichnet, dass** die Optimierungsmittel (53) ferner dazu ausgelegt sind, die Fusionsregeln als Funktion der Feedbackinformationen anzupassen.

7.  System nach einem der Ansprüche 2 bis 6, **dadurch gekennzeichnet, dass** die Gruppe von Agenten oder die optimale Population von Agenten durch Algorithmeninstanzen gebildet ist, die verschiedene Messwertauswahlen umfassen, oder verschiedene Verarbeitungsverfahren, oder verschiedene Parametrisierungen.

8.  System nach einem der vorhergehenden Ansprüche, **dadurch gekennzeichnet, dass** die anfänglichen Anomaliewahrscheinlichkeitsverteilungen bezüglich des Kontexts der Messungen standardisiert sind.

9.  Verfahren zur Überwachung einer Gruppe von Komponenten eines Geräts wie zum Beispiel eines Motors und insbesondere eines Luftfahrzeugmotors, umfassend die folgenden Schritte:

    - Sammeln von Feedbackinformationen, gegeben durch eine Expertise und ein zugeordnetes Risiko, sowie von anfänglichen Anomaliewahrscheinlichkeitsverteilungen, die für eine Gruppe von Anomalieerfassungsagenten stammen, wobei jeder der Agenten dazu ausgelegt ist, Messwerte von physikalischen Parametern bezüglich einer Untergruppe von Komponenten des Geräts zu empfangen, bevor eine anfängliche Anomaliewahrscheinlichkeitsverteilung geliefert wird,
- Liefern von momentanen Anomaliewahrscheinlichkeitsverteilungen in iterativer Weise in Übereinstimmung mit den Feedbackinformationen, wobei die momentanen Anomaliewahrscheinlichkeitsverteilungen zu einer Gruppe von optimalen Anomaliewahrscheinlichkeitsverteilungen in Übereinstimmung mit den Feedbackinformationen konvergieren,
- Synthetisieren der optimalen Anomaliewahrscheinlichkeitsverteilungen bezüglich wenigstens einer interessierenden Untergruppe von Komponenten des Geräts, um Anomalierisiken zu extrahieren, die für die interessierende Untergruppe spezifisch sind, und
- Bestimmen der Instandhaltungsoperationen als Funktion der Anomalierisiken.

**Claims**

1. System for monitoring a set of components of a device such as an engine and in particular an aircraft engine, comprising:

   - means for detecting (2) comprising a set of agents for detecting anomalies ($a_1$, ..., $a_i$, ..., $a_n$), with each one of said agents being configured to receive measurements on physical parameters relating to a sub-set of components of said device and to deliver an initial distribution of the probability of an anomaly,
   - means for acquiring (3) configured to receive feedback information (17) given by an expertise and an associated risk, as well as the initial distributions of the probability of an anomaly coming from said set of agents,
   - means for emerging (5) configured to iteratively emerge current distributions of the probability of an anomaly in line with said feedback information, with said current distributions of the probability of an anomaly converging towards a set of optimum distributions of the probability of an anomaly in accordance with said feedback information,
   - means for synthesis (7) configured to synthesise optimal distributions of the probability of an anomaly relating to at least one sub-set of interest of components of said device in order to extract the risks of an anomaly specific to said sub-set of interest, and
   - means for assisting in taking decisions (21) that make it possible to determine the operations of maintenance according to the risks of anomalies.

2. System according to claim 1, **characterised in that** the means for emerging comprise:

   - means for merging (51) configured to create each current or optimum distribution of the probability of an anomaly by merging preceding distributions of the probability of an anomaly according to predetermined rules for merging,
   - means for optimisation (53) configured to put into line each initial or current distribution of the probability of an anomaly with the feedback information that corresponds to it, in order to associate an efficiency value to it, and
   - means of management (55) configured to change the set of agents towards an optimum population of agents by creating new agents corresponding to current and optimum distributions of the probability of an anomaly and by selecting the agents that are the most compliant with the feedback information according to the efficiency values associated with said current and optimum distributions of the probability of an anomaly.

3. System according to claim 1 or 2, **characterised in that** the means for emerging (5) are furthermore configured to associate to each initial, current or optimum distribution of the probability of an anomaly relative to a sub-set of components of said device, an implication vector reflecting a contribution of each element of said sub-set on the corresponding distribution of the probability of an anomaly.

4. System according to claim 3, **characterised in that** the means for synthesis (7) are configured to synthesise the optimum distributions of the probability of an anomaly relating to said sub-set of interest by weighting the influence of each element of said sub-set of interest according to the corresponding implication vectors.

5. System according to claim 2, **characterised in that** the predefined rules for merging are chosen from among the following rules: expert rules, reduction rules, voting rule, business rules, Bayesian rules, and fuzzy logic rules.

6. System according to claim 2, **characterised in that** the means for optimisation (53) are furthermore configured to adjust the merging rules according to the feedback information.

7. System according to any of claims 2 to 6, **characterised in that** the set of agents or the optimum population of agents is formed by instances of algorithms comprising different choices of measurements, or different processing methods, or different configurations.

8. System as claimed in any preceding claim, **characterised in that** the initial distributions of the probability of an anomaly are standardised with respect to the context of the measurements.

9. Method for monitoring a set of components of a device such as an engine and in particular an aircraft engine, comprising the following steps:

- acquiring feedback information given by an expertise and an associated risk, as well as initial distributions of the probability of an anomaly coming from a set of agents for detecting anomalies, with each one of said agents being configured to receive measurements on physical parameters relating to a sub-set of components of said device before delivering an initial distribution of the probability of an anomaly,
- iteratively emerging current distributions of the probability of an anomaly in line with said feedback information, with said current distributions of the probability of an anomaly converging towards a set of optimum distributions of the probability of an anomaly in accordance with said feedback information, and
- synthesising optimum distributions of the probability of an anomaly relating to at least one sub-set of interest of components of said device in order to extract the risks of an anomaly specific to said sub-set of interest, and
- determining the operations of maintenance according to the risks of anomalies.

$\omega \in \Omega$ — E1

$a_1, ..., a_i, ..., a_n$ — E2

$Pa_1, ..., Pa_i, ..., Pa_n$ — E3

Re — E4

$Pa_{c1}, ..., Pa_{cn}$ — E5

$Pa_{01}, ..., Pa_{0n0}$ — E6

— E7

FIG.1

FIG.2

FIG.3A

FIG.3B

FIG.3C

FIG.3D

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2931264
- WO 20100764681 A
- FR 2957170